# EUROPEAN PATENT APPLICATION

(11) **EP 1 998 174 A1**
(43) Date of publication of application: **03.12.2008**
(21) Application number: 07388039.5
(22) Date of filing: 29.05.2007
(51) Int. Cl.: G01N 29/036, G01N 33/487, G01N 21/03

(54) **Method for assessment of aqueous solvent influences.**

(71) Applicant: Technical University of Denmark, 2800 Lyngby (DK)
(72) Inventor: Herik, Bohr, DK-3460 Birkerod (DK); Robert, Casad, DK-2800 Lyngby (DK); Per-Anker, Lindgard, DK-4560 Vig (DK); Dikeneos Mario, Soumpasis, Berlin 16-279 (DE)
(74) Representative: Benthin, Stig

(57) **Abstract**

The present invention concerns methods of analyzing a fluid and/or a compound in a fluid by assessing pressure related fluid influences. In particular the present invention relates to the measurement of hydrophilic-hydrophobic partition coefficients in an aqueous fluid.

## Description

### Technical field of the invention

The present invention concerns methods of analyzing a fluid and/or a compound in a fluid by assessing pressure related fluid influences. In particular the present invention relates to the measurement of hydrophilic-hydrophobic partition coefficients in an aqueous fluid.

### Background of the invention

The hydration of apolar solutes and surfaces has been termed hydrophobic hydration. Such apolar solutes and surfaces, within their hydrophobic hydration, tend to associate in aqueous solution, like oil-in-water. This tendency for hydrophobic association has been termed the hydrophobic effect.

Hydrophobic hydration and the hydrophobic effect play a central role in protein folding and drug design. The tendency of amino acid side chains to favour aqueous interactions or to disfavour them with preference for hydrophobic interactions is arguably the primary driving force of protein folding. Hydrophobic interactions in receptor binding sites and even in some enzyme binding sites are often critical components of recognition energy.

The molecular mechanisms of hydrophobic interactions involve entropic phenomena of liquid water. Hydrophobic hydration involves ordering of water hydrogen-bond networks with an associated increased density of water molecules around apolar solutes and surfaces. (Southall and Dill (2002) Biophys. Chem. 101-102, 295-307). The hydrophobic effect and hydrophobic interaction are not yet well understood. However, these phenomena are clearly entropy driven, involving rearrangements of water hydrogen-bond networks, sometimes over long ranges in solution (*for review see* Chandler (2005) Nature 437, 640-647).

Previously, hydrophobicity of molecules has been assessed experimentally based on their tendency to partition between water and an organic solvent. For protein-folding calculations, hydrophobicity of amino acid side chains has been based upon several alternative hydrophobicity scales identified in ethanol-water and dioxane-water partition coefficients of free amino acids, in octanol-water partition coefficients of N-acetyl-amino acid amides, (Nozaki and Tanford (1971) J. Biol. Chem. 246(7), 2211-2217; Fauchere and Pliska (1983) Eur. J. Med. Chem. 18(4). 369-375) and in a variety of calculated parameters based on these experimental observations (see Abraham and Leo (1987) Proteins Struct. Funct. and Genet. 2, 130-152).

In development of quantitative structure activity relationships (QSAR) for drug design, measurements of hydrophobicity of experimental compounds have proved exceptionally valuable (Mannhold et al. (1998) J. Comp.-Aid. Mol. Des. 12(3), 573-581). Typically, experimentally determined octanol-water partition coefficients have been expressed on a logarithmic scale as log P. Log P is often referred to as a measure of lipophilicity, since partitioning into biological membranes is frequently an important determinant of drug action and pharmacokinetics (Testa et al. (2000) Perspect. Drug Discovery and Des. 19(1), 179-211; Mannhold et al. (1998) J. Comp.-Aid. Mol. Des. 12(3), 573-581). The term lipophilicty is something of a misnomer. In cases where actual membrane partitioning is of interest, liposome-partition measurements can provide more direct and often more predictive measures than log P (Choi and Rogers (1990) Pharm. Res. 7(5), 508-512; Rogers and Choi (1993) Pharm. Res. 10(6) 913-917; Kitamura (1995) Anal. Chim. Acta 304, 101-106). In most cases, log P is used as a measure of hydrophobicity. The hydrophobicity of experimental compounds is important to molecular recognition, independent of considerations of membrane partitioning.

Receptor or enzyme recognition sites may comprise a generalized low dielectric environment, or hydrophobic cavity. Recognition may also involve specific points of hydrophobic interaction between ligand and receptor. Accordingly, experimental or calculated log P, or calculated hydrophobicity parameters which are based on log P measurements (Klebe et al. (1994) J. Med. Chem. 37, 4130-4146; Kellogg et al. (1991) J. Comp.-Aid. Mol. Des. 5(6), 545-552; Abraham and Leo (1987) Proteins Struct. Funct. and Genet. 2, 130-152; Leo et al. (1971) Chem. Rev. 71(6), 525-616; Nozaki and Tanford (1971) J. Biol. Chem. 246(7), 2211-2217; Fauchere and Pliska (1983) Eur. J. Med. Chem. 18(4). 369-375; Mei et al. (2005) Biopolymers 80, 775-786; Hansch et al. (1965) J. Am. Chem. Soc. 87, 2738-2742; Fujita et al. (1964) J. Am. Chem. Soc. 86, 5175-5180; Hansch and Fujita (1964) J. Am. Chem. Soc. 86, 1616-1626) are often critical variables in QSAR: In linear correlation models, hydrophobicity often explains as much as 1/3 of the correlation between structure and biological activity within a set of experimental compounds (see e.g. E. Manivannan and S. Prasanna (2005) Bioorg. Med. Chem. Lett. 15, 4496-4501; S. Kumar et al. (2007) J. Mol. Model. 13, 99-109; P. Khadikar et al. (2005) Bioorg. Med. Chem. Lett. 15, 923-930). Hydrophobicity correlations can also be parabolic (see e.g. Verma and Hansch (2007) Virology 359(1), 152-161; Lozano and Martinez (2006) Quim. Nova. 29(4), 704-709), which is indicative of additional ligand-receptor allosteric interactions (Mekapati (2005) Bioorg. Med. Chem. 13, 3737-3762).

The thermodynamics of solute partitioning between octanol and water and between other organic phases and water clearly demonstrate that partitioning is partially entropy-driven. (Mercedes and Martinez (2003) Chem. Pharm. Bull. 51(3), 237-240; Dearden and Bresnen (2005) Int. J. Mol. Sci. 6, 119-129; Fujiwara et al. (1991) Bull. Chem. Soc. Jpn. 64, 3707-3712; Martinez and Gomez (2002) J. Phys. Org. Chem. 15, 874-880; Takegami et al. (2003) Chem. Pharm Bull. 51(9), 1056-1059). Thus, reliance on log P as a measure of hydrophobicity involves reliance on an entropic rearrangement or entropy/enthalpy compensation by organic solvent to estimate a complex entropic rearrangement of water hydrogen-bond networks. The log P estimate is clearly meaningful, however, it is equally clearly *indirect.* Not surprisingly, partition coefficients for any given compound differ considerably depending upon which organic solvent is used. The usefulness of log P accordingly lies, not in its absolute magnitude, but as a proportionality factor - log P is *proportional* to hydrophobicity.

In the age of combinatorial chemistry and high throughput screening, hydrophobicity parameters are often calculated rather than experimentally determined. Log P is typically calculated by a variety of available routines (Abraham and Leo (1987) Proteins Struct. Funct. and Genet. 2, 130-152). Alternatively, hydrophobicity parameters may be embedded in 3D comparative molecular field routines, such as HINT or COMSIA. Whether estimating log P directly or as hydrophobic field parameters, contemporary calculation routines ultimately rely on information derived from organic phase partition measurements.

Calculated log P values do not perfectly predict log P, which, as described above, provides only an *indirect proportionality factor* for assessment of the hydrophobic effect in liquid water. Indeed, calculated log P often contains surprising discrepancies with observation, and in its most predictive current manifestation can only produce an overall accuracy of r=0.91 (Sakuratani et al. (2007) QSAR and Comb. Sci. 26(1), 109-116).

Compounds which show pronounced discrepancies between observed and calculated log P are of special interest, since these may be examples in which macroscopic features or molecular gestalt implicate water hydrogen-bond networks in a manner beyond the predictive scope of log P-derived fragment constants. For example, the amino acids proline and tyrosine show discrepancies between observed and calculated log P on the order of 30 %.

It will therefore be advantageous to provide a direct experimental measure of intrinsic hydrophobicity. Such a measure could be obtained by a physical treatment of an aqueous solution whereby the solvent is divided into hydrophilic and hydrophobic compartments. The partitioning of solutes between these hydrophilic and hydrophobic regions within one aqueous solution would thus provide a *direct* assessment of hydrophobicity. Such a measurement can be used directly as a second generation improvement of log P or as a hydrophobicity parameter complementary to log P. Further, such a measurement can be used to recalculate amino acid hydrophobicity scales, and atomic and fragment hydrophobicity parameters used by contemporary calculation routines.

Such a measurement is possible using the resonator cell described in the co-pending application titled "Resonator Cell for Measuring Pressure Effects" (internal reference: P80701137) with concurrent filing date and similar inventorship (hereinafter referred to as "the co-pending application"), which is hereby incorporated by reference in its entirety. The longitudinal, standing density wave established in the resonator cell provides nodal regions that define an extreme of high solvent density as well as opposite nodal regions that define an extreme of low solvent density. Hydrophobic hydration is associated with increased solvent density immediately surrounding a solute or surface. (Southall and Dill (2002) Biophys. Chem. 101-102, 295-307; Jönsson et al. (2006) J. Phys. Chem. B 110(17), 8782-8788; Reddy and Yethiraj (2004) J. Chem. Phys. 121(9), 4203-4209). In closed high pressure systems, in which the entire solution is subject to one condition, high pressures stabilize the solvent-separated state of apolar solutes in hydrophobic hydration (Ghosh et al. (2001) J. Am. Chem. Soc. 123, 10997-11003; Hummer et al. (1998) Proc. Natl. Acad. Sci. USA 95(4),1552-1555). Thus, in closed high pressure systems, the application of high pressure serves to counteract the hydrophobic effect. In contrast, the resonator cell provides an open system in which regions of high and low density (which could be termed high and low pressure) exist in quasi-sedimentative, diffusional equilibrium. Thus, in the open system of the resonator cell, solutes simply equilibrate to a thermodynamically appropriate partition or distribution between high density regions, with maximal opportunities for hydrogen-bonding (hydrophilic), and low density regions, with minimal volume resistance (hydrophobic).

### Summary of the invention

In some embodiments, the present invention provides a method of measurement of a hydrophilic-hydrophobic partition coefficient in an aqueous fluid by measuring the partition between high and low pressure regions of a single body of aqueous fluid, whereby the high and low pressure regions are generated by an essentially standing wave using an acoustic resonator cell.

### Among other advantages, the method provides the following:

The hydrophilic-hydrophobic interaction is measured directly in an aqueous fluid alone, as opposed to the indirect measurement of hydrophilic-hydrophobic interaction using octanol-water partition. Besides being an alternative to the octanol-water partition, it is believed to be useful in generating a better QSAR, since the hydrophilic-hydrophobic interaction is measured directly.

The method can advantageously be used together with a resonator cell designed to be used with small volumes of aqueous fluid, such as the one described in the co-pending application.

According to the invention there is provided a method for assessing aqueous solvent influences comprising the steps of providing an aqueous solution within a resonator cell, exposing the resonator cell to a continuous ultrasonic impulse whereby an essentially longitudinal, standing density wave is established in the solution, and monitoring the distribution or partition of components of the solution between different density regions of the standing wave.

### Brief description of the drawings

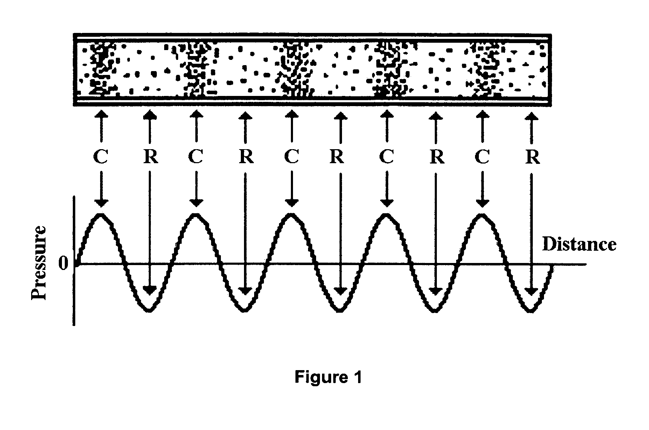

**Figure 1****:** Schematic representation of an acoustic longitudinal standing wave in a fluid; C: compression (high pressure); R: rarefaction (reduced pressure).

### Detailed description of the invention

One aspect of the present invention relates to a method for assessment of aqueous solvent influences comprising the steps of:
(a) providing an aqueous solution within a resonator cell,
(b) exposing the resonator cell to a continuous ultrasonic impulse whereby an essentially longitudinal, standing density wave is established in the solution,
(c) monitoring the distribution or partition of components of the solution between different density regions of the standing wave.

An essentially longitudinal, standing density wave can be created in a fluid within an acoustic resonator cell (in some embodiments, volume can be about 1 ml) by exposing the cell to an ultrasonic impulse (0.1-3 MHz). Once the standing density wave is established, it is possible to monitor partition of components of the solution between different density regions of the standing wave. Partitioning can also be monitored in relaxation kinetics after the ultrasonic impulse is discontinued. Partitioning can be monitored using any spectroscopic or other detection means well known in the art. Preferably, detection means are provided that monitors the entire length of the resonator cell, thereby providing a full resolution of high and low pressure regions of the standing density wave.

In the following partition coefficient and distribution coefficient are used interchangeably, and can both be expressed directly or in logarithmic form.

In one embodiment of the present invention the distribution or partition of components are monitored in regions associated with high density (high pressure) nodal points and in regions associated with low density (low pressure) opposite nodal points of the standing wave. It is preferred that the distribution or partition is measured in regions where the difference in density (pressure) is the largest. However, it is possible to monitor the partition in any two regions, as long as the densities (pressures) of the two regions are not essentially the same.

In another embodiment a partition coefficient expressed either as logarithm or direct. The concentration of a solute detected at two different density regions of the standing wave (D₁ and D₂) provides a partition measurement.

The method described herein can be used to measure the partition coefficient of virtually any molecule. Of particular interest is the measurement of pharmaceutical candidate compounds.

In other embodiments the method of the present invention is used to assess a distribution or partition of all the amino acids, all 5800 sources of fragment constants cited in A. Leo et al. (1971) Chem. Rev. 71 (6), 525-616, and all original sources of chemical parameters used to calculate hydrophobicity. The partition coefficients determined in this manner can then be used to calculate factors for estimation of hydrophobicity.

In still another embodiment, partition coefficients determined using the method is used to define a quantitative structure-activity relationship (QSAR).

Resonator cells such as the ones described in the co-pending application are especially suitable for the measurements described herein.

### Examples

### Prophetic example 1

Use the resonator cell described in the co-pending application to observe the partitioning of 20 D- and L- amino acids such as D- and L- (Ala, Cys, Asp, Glu, Phe, Gly, His, Ile, Lys, Leu, Met, Asn, Pro, Gln, Arg, Ser, Thr, Val, Trp, Tyr).

Use these results to revisit amino acid hydrophobicity scale and re-define factors for protein folding calculations.

Use these results to formulate a QSAR for some suitable excitatory amino acid receptor for which data are available (e.g., glutamate, aspartate receptor).

### Prophetic example 2

### QSAR between the number of carbons in straight chain alcohols and their water solubility

Use the resonator cell described in the co-pending application to observe the partitioning of methanol, ethanol, *n*-propanol, *n*-butanol, *n*-pentanol, and *n*-hexanol.

Degassed solutions of each of the alcohols are prepared in water at ambient temperature, and introduced into the resonator cell. A standing wave is created in the cell, and evenly distributed absorption measurements along the longitudinal axis of the cell are made.

## Claims

1. Method for assessment of aqueous solvent influences comprising the steps of:
(a) providing an aqueous solution within a resonator cell,
(b) exposing the resonator cell to a continuous ultrasonic impulse whereby an essentially longitudinal, standing density wave is established in the solution,
(c) monitoring the distribution or partition of components of the solution between different density regions of the standing wave.

2. Method according to claim 1 wherein said different density regions of the standing wave are in regions associated with high density nodal points and in regions associated with low density opposite nodal points of the standing wave.

3. Use of the method according to any of claims 1-2 to define a partition coefficient expressed either as logarithm or direct.

4. Use of the method according to any of claims 1-2 to assess a distribution or partition of any one of the following: all the amino acids, all 5800 sources of fragment constants cited in A. Leo *et al.* (1971) *Chem. Rev.* 71 (6), 525-616.

5. Use according to any of the preceding claims, wherein the measurements are used to calculate factors for estimation of a hydrophilic-hydrophobic partition coefficient.

6. Use according to any of the preceding claims to define a QSAR.

7. Use according to any of the preceding claims to calculate parameters for computer modelling of hydrophobic interactions.

8. The method according to any of claims 1-2, wherein the monitoring comprises the measurement of absorption and/or emission spectra.

9. The method according to any of claims 1-2, wherein the monitoring comprises IR, RAMAN, ESR, refractive index, fluorescence, phosphorescence, UV/VIS, NMR, MS, X-ray scattering, radioisotopic methods.
